# EUROPÄISCHE PATENTSCHRIFT

(11) **EP 3 298 729 B1**
(45) Veröffentlichungstag und Bekanntmachung des Hinweises auf die Patenterteilung: **21.10.2020**
(21) Anmeldenummer: 16720090.6
(22) Anmeldetag: 26.04.2016
(51) Int. Cl.: H04L 12/24, H04L 12/40, H04L 12/46, H04L 29/12

(54) **AUTOMATISIERTER TOPOLOGIESCAN**
AUTOMATED TOPOLOGY SCAN
SCAN DE TOPOLOGIE AUTOMATISÉ

(30) Priorität: 21.05.2015 DE 102015108053
(43) Veröffentlichungstag der Anmeldung: 28.03.2018
(73) Patentinhaber: Endress+Hauser Process Solutions AG, 4153 Reinach (CH)
(72) Erfinder: LUBER, Werner, 4123 Allschwil (CH); SOTRIFFER, Ingomar, 79588 Efringen-Kirchen (DE); MAYER, Michael, 4104 Oberwil (CH)
(74) Vertreter: Andres, Angelika Maria
(86) Internationale Anmeldenummer: PCT/EP2016/059311
(87) Internationale Veröffentlichungsnummer: WO 2016/184649

(56) Entgegenhaltungen:
- WO-A1-2016/119956
- DE-A1-102008 027 846
- US-A1- 2009 049 207
- US-A1- 2014 359 095

## Beschreibung

Die Erfindung betrifft ein Verfahren zum automatisierten Erfassen einer Topologie eines Feldbusnetzwerks sowie ein Steuersoftwaremodul zum automatisierten Erfassen einer Topologie eines Feldbusnetzwerks von einer Gerätezugriffssoftware aus. Des Weiteren betrifft die Erfindung eine Gerätezugriffssoftware, die dazu ausgelegt ist, auf Geräte eines Feldbusnetzwerks zuzugreifen.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Die Parametrierung, Konfiguration und Zustandsüberwachung der Feldgeräte eines Feldbusnetzwerks erfolgt in der Regel mittels einer auf einem Host installierten Gerätezugriffssoftware. In einer typischen Gerätezugriffssoftware wird die hierarchische Struktur des Feldbusnetzwerks mit Hilfe von Gerätetreibern bzw.

Gerätebeschreibungsdateien nachgebildet. Solche Gerätezugriffssoftware ist beispielsweise aus den Patentanmeldungen US 2009/0049207 A1 sowie US 2014/0359095 A1 bekannt. Die Anordnung der Gerätetreiber bzw.

Gerätebeschreibungsdateien entspricht spiegelbildlich der Struktur der Gerätezugriffssoftware.

Es ist daher Aufgabe der Erfindung, ein Verfahren und ein Steuersoftwaremodul zur Verfügung zu stellen, mit dem die Topologie eines Feldbusnetzwerks erfasst werden kann.

Gelöst wird diese Aufgabe durch die in den Ansprüchen 1 und 12 angegebenen Merkmale.

Vorteilhafte Weiterentwicklungen der Erfindung sind in den Unteransprüchen angegeben.

Das Verfahren entsprechend den Ausführungsformen der Erfindung dient zum automatisierten Erfassen einer Topologie eines Feldbusnetzwerks von einer Gerätezugriffssoftware aus. Die Gerätezugriffssoftware ist auf einem Host installiert, der mit dem Feldbusnetzwerk in Datenverbindung steht, und das Feldbusnetzwerk umfasst eine Mehrzahl von Feldgeräten und Gatewaygeräten. Das Verfahren umfasst Scannen eines Adressraums eines Feldzugangsgeräts oder eines vorgegebenen Gatewaygeräts des Feldbusnetzwerks und Bestimmen von in diesem Adressraum vorhandenen Gatewaygeräten und Feldgeräten. Für jedes gefundene Gatewaygerät umfasst das Verfahren Scannen eines von dem gefundenen Gatewaygerät bereitgestellten weiteren Adressraums und Bestimmen von in dem weiteren Adressraum vorhandenen weiteren Gatewaygeräten und Feldgeräten. Der vorhergehende Schritt wird für jedes weitere gefundene Gatewaygerät wiederholt, bis sämtliche im Bereich unterhalb des Feldzugangsgeräts oder des vorgegebenen Gatewaygeräts im Feldbusnetzwerk vorhandenen Gatewaygeräte gefunden sind oder bis eine Abbruchbedingung erfüllt ist.

Das Verfahren beginnt mit dem Scannen des Adressraums des Feldzugangsgerät oder eine ausgewählten Gatewaygeräts. Wenn innerhalb des durchsuchten Adressraums ein weiteres Gatewaygerät gefunden wird, wird automatisch auch für den Adressraum dieses weiteren Gatewaygeräts ein Scan angestoßen. Im weiteren Verlauf wird jeweils dann, wenn ein weiteres Gatewaygerät gefunden wird, selbsttätig ein Scan des Adressraums dieses Gatewaygeräts angestoßen. Mit Hilfe dieser rekursiven Scanoperationen ist es möglich, das Feldbusnetzwerk bis in die Tiefe vollständig zu scannen und auf diese Weise die vollständige Topologie des Feldbusnetzwerks zu erfassen. Das Verfahren ist in der Lage, selbsttätig und ohne weitere Interaktion mit dem Benutzer das komplette Feldbusnetzwerk zu durchscannen und die Topologie zu erfassen. Auch komplexe verschachtelte Feldbusnetzwerke können mit dem Verfahren fehlerfrei gescannt werden.

Das Verfahren kann z.B. dazu verwendet werden, eine Topologie eines unbekannten Feldbusnetzwerks zu ermitteln. Darüber hinaus kann das Verfahren dazu verwendet werden, um festzustellen, welche Veränderungen an einem bereits früher gescannten Feldbusnetzwerk seit dem früheren Scan vorgenommen worden sind. Darüber hinaus kann das Verfahren zum Aufsetzen von geeigneten Treibern in der Gerätezugriffssoftware verwendet werden. Hierzu wird jedesmal dann, wenn beim Durchscannen des Feldbusnetzwerks ein neues Feldgerät oder Gatewaygerät gefunden wird, ein passender Treiber für diese Komponente in der Gerätezugriffssoftware instanziiert. Auf diese Weise wird bereits während des Scanvorgangs eine passende hierarchische Treiberstruktur für das Feldbusnetzwerk erzeugt.

Das Verfahren zum automatisierten Erfassen einer Topologie eines Feldbusnetzwerks spart viel Zeit. Im Unterschied zu früher muss das Bedienpersonal nicht ständig vor Ort sein, wenn das Feldbusnetzwerk gescannt wird. Ein umfangreicherer Scan kann insbesondere auch über Nacht durchgeführt werden.

Nachfolgend ist die Erfindung anhand von in der Zeichnung dargestellten Ausführungsbeispielen näher erläutert. Es zeigen:
Fig. 1 ein Feldbusnetzwerk und einen Host, auf dem eine Gerätezugriffssoftware installiert ist;
Fig. 2 ein Ablaufschema, bei dem Topologie des Feldbusnetzwerks durch eine Vielzahl von manuell angestoßenen Scanvorgängen erfasst wird;
Fig. 3 ein weiteres Ablauflaufschema, bei dem die zur Erfassung der Topologie erforderlichen Scanvorgänge automatisiert angestoßen werden;
Fig. 4 das Feldbusnetzwerk von Fig. 1, wobei in die Rahmenapplikation eine Vielzahl von Treibern eingebunden sind;
Fig. 5 ein Beispiel für ein komplexes verzweigtes Feldbusnetzwerk; und
Fig. 6 eine schematische Darstellung der zur Erfassung der Topologie des Feldbusnetzwerks von Fig. 5 benötigten Scanoperationen.

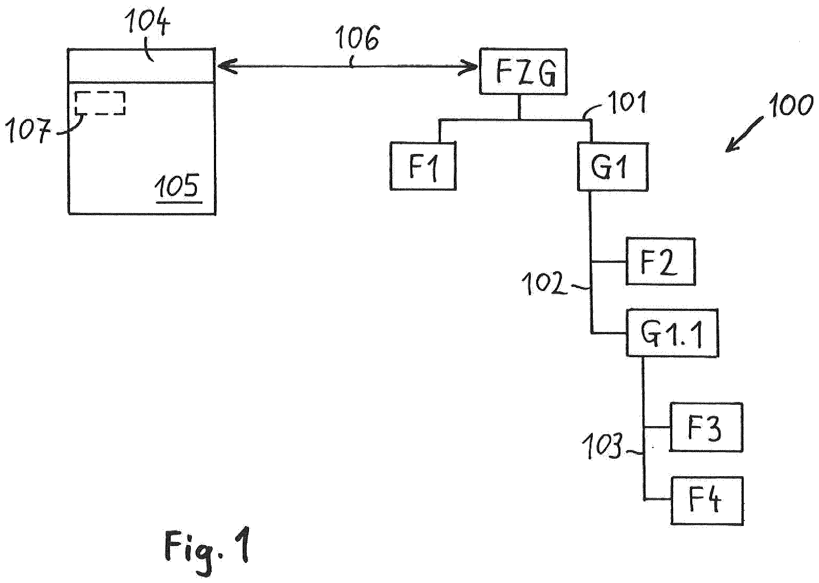

Fig. 1 zeigt ein Feldbusnetzwerk 100, das eine Mehrzahl von Feldgeräten und Gatewaygeräten umfasst. Auf der obersten Hierarchieebene des Feldbusnetzwerks 100 befindet sich ein Feldzugangsgerät FZG. Das Feldzugangsgerät FZG ist über ein Profibussegment 101 mit einem Feldgerät F1 und einem Gatewaygerät G1 verbunden. Das Profibussegment 101 ist über das Gatewaygerät G1 mit einem weiteren Profibussegment 102 gekoppelt, an das ein Feldgerät F2 und ein weiteres Gatewaygerät G1.1 angeschlossen sind. Über das Gatewaygerät G1.1 ist das Profibussegment 102 mit einem HART-Segment 103 gekoppelt, wobei das Gatewaygerät G1.1 dazu ausgelegt ist, den Datenverkehr aus dem Protokoll Profibus in das Protokoll HART umzusetzen und umgekehrt. An das HART-Segment 103 sind die beiden HART-Feldgeräte F3 und F4 angeschlossen.

Verschachtelte Feldbustopologien umfassen häufig ein oder mehrere Gatewaygeräte. Das in Fig. 1 gezeigte Feldbusnetzwerk 100 umfasst beispielsweise die beiden Gatewaygeräte G1 und G1.1. Im Allgemeinen dient ein Gatewaygerät als Umsetzer zwischen verschiedenen Feldbussegmenten. Dabei besitzt ein Gatewaygerät in der Regel einen eigenen Adressbereich. Über die Adressen dieses Adressbereichs kann auf die an das Gatewaygerät angeschlossenen Geräte zugegriffen werden.

Unter den Begriff "Gatewaygerät" fallen dabei Geräte wie beispielsweise Remote-IOs, Gateways, Links, Koppler, Protokollumsetzer, Multiplexer, etc.

Bei einem Remote-IO handelt es sich z.B. um einen lokalen Verteilerknoten, an den ein oder mehrere Feldgeräte oder Gatewaygeräte angeschlossen werden können. Der Remote-IO dient in erster Linie zur Verringerung des Verkabelungsaufwands. Anstatt jede Komponente einzeln mit einem entfernten Feldbusnetzwerk zu verkabeln, wird ein Remote-IO als Verteilerknoten an das Feldbusnetzwerk angeschlossen, und über den Remote-IO wird der Datenverkehr an verschiedene in der Nachbarschaft befindliche Feldgeräte weitergeleitet. Bei einem Remote-IO steht der Aspekt der lokalen Verteilung des Datenverkehrs im Vordergrund.

Bei einem Gateway geht es in erster Linie um die Kopplung zwischen unterschiedlichen Feldbussegmenten. Dabei sorgt der Gateway für eine geeignete Umsetzung des Datenverkehrs zwischen den Feldbussegmenten. Diese Umsetzung kann eine Protokollumsetzung beinhalten, dies ist jedoch nicht zwingend.

Bei einem Protokollumsetzer steht dagegen die Protokollumsetzung im Vordergrund. Der ankommende Datenverkehr wird aus einem ersten Feldbusprotokoll in ein zweites Feldbusprotokoll bzw. in umgekehrter Richtung aus dem zweiten Protokoll in das erste Protokoll umgesetzt. Bei dem in Fig. 1 gezeigten Beispiel beinhaltet z.B. das Gatewaygerät G1.1 eine derartige Protokollumsetzer-Funktionalität.

Bei einem Multiplexer steht die Erweiterung des verfügbaren Adressbereichs im Vordergrund. Der Multiplexer stellt einen Adressbereich zur Verfügung, über den eine Vielzahl von an den Multiplexer angeschlossenen Geräten adressiert werden kann. Entsprechend der Adressierung wird der ankommende Datenverkehr dann zum jeweiligen Zielgerät geroutet.

Die Parametrierung, Konfiguration und Zustandsüberwachung der Feldgeräte eines Feldbusnetzwerks erfolgt mittels einer auf einem Host 104 installierten Gerätezugriffssoftware 105. Der Host 104 ist über eine Ethernetverbindung 106 mit dem Feldbusnetzwerk 100 verbunden. Über die Gerätezugriffssoftware 105 kann auf die verschiedenen Komponenten des Feldbusnetzwerks 100 zugegriffen werden. Insbesondere können von der Gerätezugriffssoftware 105 aus die Parameter der verschiedenen Komponenten des Feldbusnetzwerks 100 ausgelesen, dargestellt und verändert werden. Darüber hinaus ermöglicht die Gerätezugriffssoftware 105 eine Zustandsüberwachung (Condition Monitoring) der Komponenten des Feldbusnetzwerks 100. Der für diese Aufgaben erforderliche Datenaustausch wird in der Regel über den sogenannten azyklischen Datenverkehr abgewickelt.

Damit von der Gerätezugriffssoftware 105 aus auf die verschiedenen Komponenten und Geräte des Feldbusnetzwerks 100 zugegriffen werden kann, muss innerhalb der Gerätezugriffssoftware 105 jeweils ein passender Treiber für das jeweilige Gerät bzw. die jeweilige Komponente des Feldbusnetzwerks 100 vorhanden sein. Mit Hilfe dieses Treibers kann dann von der Gerätezugriffssoftware 105 aus auf das jeweilige Gerät bzw. die jeweilige Komponente des Feldbusnetzwerks 100 zugegriffen werden.

Dabei wird die hierarchische Struktur des Feldbusnetzwerks 100 innerhalb der Gerätezugriffssoftware 105 mit Hilfe von Gerätetreibern bzw. Gerätebeschreibungsdateien nachgebildet. Die Anordnung der Gerätetreiber bzw. Gerätebeschreibungsdateien entspricht dabei spiegelbildlich der Struktur des Feldbusnetzwerks.

Bei der Gerätezugriffssoftware 105 kann es sich z.B. um eine FDT-Rahmenapplikation handeln, wobei FDT für "Field Device Tool" steht. In die FDT-Rahmenapplikation können "Device Type Manager" (DTMs), also Gerätetreiber für die verschiedenen Geräte und Komponenten des Feldbusnetzwerks 100 eingebunden werden, wobei DTMs von unterschiedlichen Herstellern eingebunden werden können. Neben dem Standard FDT/DTM gibt es eine Vielzahl von alternativen Standards für die Gerätezugriffssoftware und die darin eingebundenen Gerätetreiber.

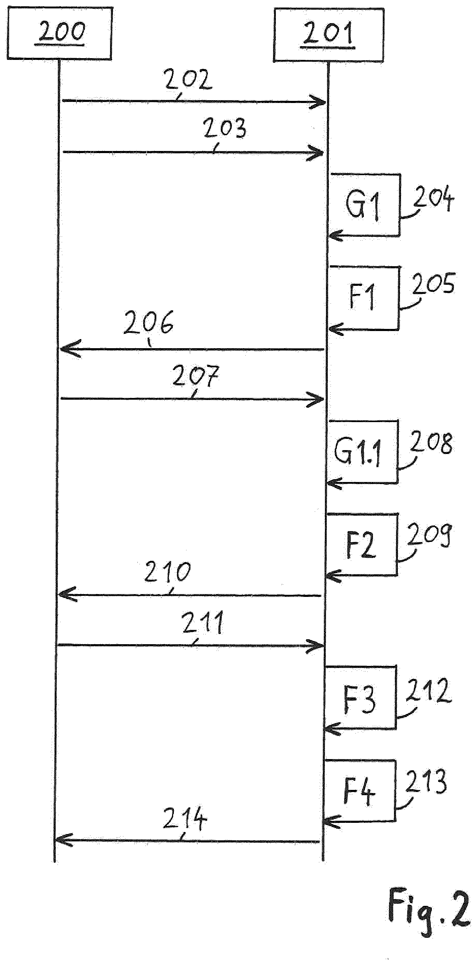

In Fig. 2 ist anhand eines Ablaufschemas gezeigt, wie bei den bisherigen Lösungen des Stands der Technik die passenden Treiber für das Feldbusnetzwerk 100 ausgewählt und in die Gerätezugriffssoftware eingebunden wurden. Dabei zeigt Fig. 2 die Interaktionen zwischen einem Benutzer 200 und einer Rahmenapplikation 201, in die die unterschiedlichen Gerätetreiber eingebunden werden.

Zunächst wird vom Benutzer 200 im Schritt 202 ein Kommunikations-DTM in die Rahmenapplikation 201 eingefügt. Der Kommunikations-DTM steht an oberster Stelle der DTM-Hierarchie und ist dem Feldzugangsgerät FZG zugeordnet. Der Kommunikations-DTM stellt in gewisser Weise die Außenschnittstelle der Gerätezugriffssoftware 105 dar. Sämtlicher ein- und ausgehender Datenverkehr wird über den Kommunikations-DTM geführt.

Im nächsten Schritt 203 veranlasst der Benutzer 200 auf der obersten Hierarchieebene des Feldbusnetzwerks 100 einen Scan. Dabei wird der gesamte Adressraum des Feldzugangsgeräts FZG gescannt. Zu jeder Adresse des Adressraums wird ermittelt, ob unter der jeweiligen Adresse eine Komponente des Feldbusnetzwerks 100, insbesondere ein Feldgerät oder ein Gatewaygerät, erreichbar ist.

Wenn an einer bestimmten Adresse eine Komponente des Feldbusnetzwerks 100 gefunden wird, dann fragt die Rahmenapplikation 201 eine Reihe von Spezifikationen von dem gefundenen Gerät ab, und zwar insbesondere Informationen über den Gerätetyp, den Hersteller des Geräts, die Hardwareversion und die Softwareversion des Geräts. Darüber hinaus wird abgefragt, für welches Feldbusprotokoll und welche Protokollversion das Gerät ausgelegt ist. Konkret fragt die Rahmenapplikation von dem neu gefundenen Gerät ein oder mehrere von folgenden ab: Hersteller-ID, Geräte-ID, Geräte-Version bzw. Device Revision, Geräteprofil bzw. Profile Revision, Software-Version bzw. Software Revision, Protokoll-Version bzw. Command Revision, etc.

Beim Scannen des Adressraums des Feldzugangsgeräts FZG werden das Gatewaygerät G1 und das Feldgerät F1 gefunden, und zu jedem der beiden gefundenen Geräte G1 und F1 werden von der Rahmenapplikation 201 die oben näher angegebenen Gerätespezifikationen abgefragt. Dadurch kann zum einen die Topologie des Feldbusnetzwerks 100 ermittelt werden. Zum anderen können diese Spezifikationen dazu genutzt werden, passende Treiber für die gefundenen Geräte auszuwählen.

Wenn zu einem gefundenen Gerät ein Treiber bzw. DTM vorhanden ist, der in Hinblick auf Geräteversion, Hersteller, Protokollversion, Softwareversion des Geräts genau passt, dann kann dieser Treiber sofort instanziiert werden.

Häufig steht jedoch kein Treiber zur Verfügung, der in Bezug auf sämtliche genannten Kriterien genau passt. In diesem Fall sind in einem gewissen Umfang Kompromisse notwendig. Zu einem Gerät, das eine bestimmte Software-, Hardware- oder Protokoll-Version aufweist, könnte man beispielsweise einen Treiber zu einer früheren (oder späteren) Hardware-, Software- oder Protokoll-Version installieren, sofern die Versionen nicht zu weit auseinander liegen. Auch ein nur in etwa passender Gerätetreiber ermöglicht in der Regel einen störungsfreien Zugriff auf das Gerät und die Geräteparameter. Allzu weit dürfen die Treiberversion und die Geräteversion jedoch nicht auseinander liegen. Letztendlich obliegt es dem Benutzer 200, welchen Treiber er akzeptiert.

Wenn geeignete Treiber für die gefundenen Geräte ausgewählt sind, veranlasst die Rahmenapplikation 201 eine Instanziierung der Treiber. Für das beim Scannen gefundene Gatewaygerät G1 wird in Schritt 204 ein passender Gateway-DTM in die Rahmenapplikation 201 eingebunden, und zu dem Feldgerät F1 wird in Schritt 205 ein passender Geräte-DTM instanziiert. In Schritt 206 wird dem Benutzer 200 von der Rahmenapplikation 201 mitgeteilt, dass der in Schritt 203 gestartete Scan abgeschlossen ist.

Allerdings wurde bei diesem Scan die Topologie unterhalb des Gatewaygeräts G1 noch nicht erfasst. Das Gatewaygerät G1 besitzt einen eigenen Adressraum, über den eine Vielzahl von angeschlossenen Geräten und Komponenten adressiert werden kann. Insofern ist es erforderlich, in einem weiteren Scanvorgang den Adressraum des Gatewaygeräts G1 zu scannen. Hierzu veranlasst der Benutzer 200 in Schritt 207 einen weiteren Scanvorgang, bei dem von der Rahmenapplikation 201 aus der komplette Adressbereich des Gatewaygeräts G1 durchgescannt wird.

Bei diesem Scan werden das Gatewaygerät G1.1 und das Feldgerät F2 gefunden. Zu jedem der gefundenen Geräte und Komponenten fragt die Rahmenapplikation 201 die Gerätespezifikationen ab. Anschließend wird in Schritt 208 von der Rahmenapplikation 201 ein passender Gateway-DTM für den Gateway G1.1 instanziiert, und in Schritt 209 wird ein passender Geräte-DTM für das Feldgerät F2 instanziiert. Im darauffolgenden Schritt 210 teilt die Rahmenapplikation 201 dem Benutzer 200 mit, dass der Scan des Adressraums vom Gateway G1 abgeschlossen ist.

Allerdings ist noch nicht bekannt, welche Geräte in den Hierarchieebenen unterhalb des Gatewaygeräts G1.1 vorhanden sind. Hierzu stößt der Benutzer 200 in Schritt 211 einen weiteren Scanvorgang an, bei dem der gesamte Adressraum des Gatewaygeräts G1.1 Adresse für Adresse durchgescannt wird. Im Rahmen dieses Scans werden die beiden Feldgeräte F3 und F4 ermittelt. Die Rahmenapplikation 201 fragt daraufhin die Gerätespezifikationen zu den beiden gefundenen Feldgeräten F3 und F4 ab. Von der Rahmenapplikation 201 wird daraufhin in Schritt 212 ein geeigneter Geräte-DTM für das Feldgerät F3 instanziiert, und in Schritt 213 wird ein Geräte-DTM für das Feldgerät F4 instanziiert. Im Schritt 214 teilt die Rahmenapplikation 201 dem Benutzer 200 mit, dass der Scan des Adressraums vom Gatewaygerät G1.1 abgeschlossen ist.

Bei der in Fig. 2 dargestellten Vorgehensweise muss der Benutzer 200 für die vollständige Erfassung der Topologie eines Feldbusnetzwerks nacheinander manuell eine Vielzahl von einzelnen Scanoperationen anstoßen. Außerdem muss er jeweils nach Beendigung einer Scanoperation geeignete Treiber bzw. DTMs für die gefundenen Geräte auswählen und in die Gerätezugriffssoftware einbinden. Selbst bei einem relativ einfachen Feldbusnetzwerk wie beispielsweise dem in Fig. 1 gezeigten Feldbusnetzwerk 100 sind zur Erfassung der Topologie bereits drei separate Scanvorgänge erforderlich. Umfangreichere verschachtelte Feldbusnetzwerke können unter Umständen 100 Geräte oder mehr umfassen, und dementsprechend wird ein manuelles Scannen der kompletten Feldbustopologie sehr aufwändig, weil der Benutzer sehr viele einzelne Scans veranlassen muss. Hinzu kommt, dass ein Benutzer beim Initiieren von Scanvorgängen und beim Instanziieren von passenden Treibern in umfangreichen verschachtelten Feldbusnetzwerken leicht den Überblick verliert, so dass beim Durchführen der Scans und beim Einbinden der Treiber Fehler auftreten können.

Insofern wird im Folgenden eine automatisierte Durchführung der verschiedenen Scanvorgänge vorgestellt, die insbesondere in verschachtelten Feldbustopologien zu einer erheblichen Vereinfachung führt.

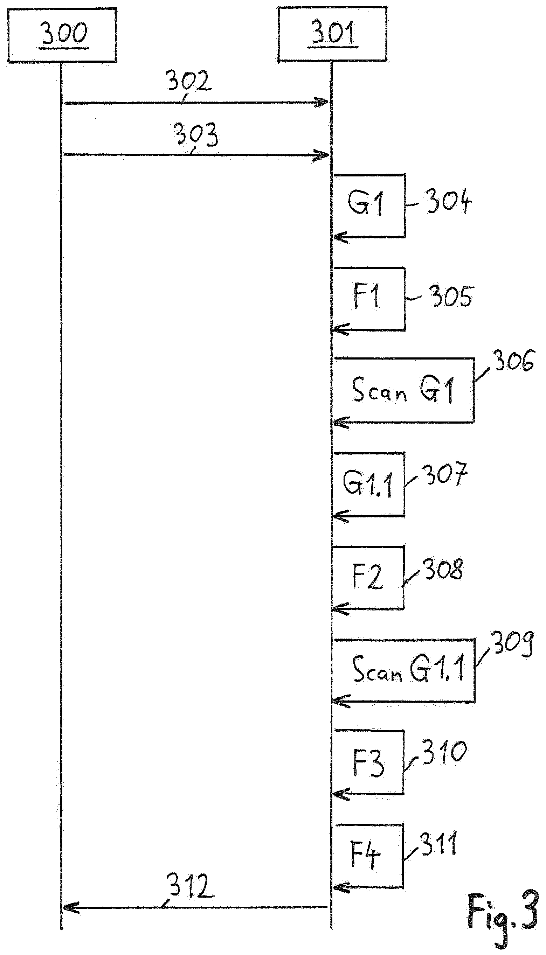

In Fig. 3 ist ein Ablaufschema gezeigt, bei dem nacheinander verschiedene Scanvorgänge automatisch angestoßen werden, um auf diese Weise die Topologie eines Feldbusnetzwerks zu erfassen. Dabei werden die verschiedenen Scanvorgänge automatisiert angestoßen, ein manuelles Anstoßen der Scanvorgänge wie in Fig. 2 ist bei dem in Fig. 3 gezeigten Ablaufschema nicht erforderlich.

Zur automatisierten Durchführung der verschiedenen Scanprozesse ist innerhalb der Gerätezugriffssoftware 105 ein zusätzliches Steuersoftwaremodul 107 bzw. Plug-in vorgesehen, das in Fig. 1 gestrichelt eingezeichnet ist. Dieses Steuersoftwaremodul 107 ist dazu ausgelegt, die Topologie des Feldbusnetzwerks 100 zu analysieren und für jedes gefundene Gatewaygerät selbsttätig einen Scan des Adressraums dieses Gatewaygeräts zu initiieren.

In Fig. 3 ist die Interaktion zwischen einem Benutzer 300 und einer Rahmenapplikation 301 gezeigt. Zu Beginn instanziiert der Benutzer 300 in Schritt 302 innerhalb der Rahmenapplikation 301 einen Kommunikations-DTM. Dann startet der Benutzer 300 im nächsten Schritt 303 einen Scan des gesamten Feldbusnetzwerks 100. Dabei wird als Erstes ein Scan über den Adressraum des Feldzugangsgeräts FZG durchgeführt. Innerhalb dieses Adressraums werden das Feldgerät F1 sowie das Gatewaygerät G1 gefunden. Daraufhin werden von der Rahmenapplikation 301 aus die Gerätespezifikationen des gefundenen Feldgeräts F1 und des gefundenen Gatewaygeräts G1 abgefragt. Insbesondere werden z.B. ein oder mehrere von folgenden abgefragt: Hersteller-ID, Geräte-ID, Geräte-Version bzw. Device Revision, Geräteprofil bzw. Profile Revision, Software-Version bzw. Software Revision, Protokoll-Version bzw. Command Revision. Sobald auf Seiten der Rahmenapplikation 301 die Gerätespezifikationen des Feldgeräts F1 und des Gatewaygeräts G1 bekannt sind, werden passende Treiber für das Feldgerät F1 und das Gatewaygerät G1 ausgewählt.

Wenn ein Treiber gefunden wird, der hinsichtlich Hersteller, Hardware-, Software- und Protokollversion genau passt, dann wird der gefundene Treiber sofort instanziiert. Wenn es in Hinblick auf die Hardware-, Software- oder Protokollversion jedoch Abweichungen zwischen dem gefundenen Treiber und dem gefundenen Gerät gibt, dann wird ausgehend von den Abweichungen die Qualität des Treibers in Bezug auf das jeweilige Gerät bestimmt. Je besser der Treiber zum Gerät passt, desto höher ist der Qualitätswert. Wenn der Treiber zwar nun nicht genau zum Gerät passt, der Qualitätswert des Treibers aber oberhalb eines vorgegebenen Grenzwerts liegt, dann wird der Treiber automatisch instanziiert und in die Rahmenapplikation 301 eingebunden. Dies geschieht ohne weitere Rückfrage beim Benutzer 300. Eine Rückfrage beim Benutzer 300 ist nur dann erforderlich, wenn der Qualitätswert des zur Verfügung stehenden Treibers unter dem vorgegebenen Grenzwert liegt.

Wenn geeignete Treiber gefunden sind, werden diese Treiber in die Treiberhierarchie der Rahmenapplikation 301 eingefügt und automatisch instanziiert. Im Schritt 304 wird der Treiber für das Gatewaygerät G1 instanziiert, und im Schritt 305 wird der Treiber für das Feldgerät F1 instanziiert.

Durch das Scannen des Adressraums des Feldzugangsgeräts FZG ist die Topologie des Feldbusnetzwerks 100 jetzt bis zum Gateway G1 hin bekannt. Die Topologie in den Hierarchieebenen unterhalb des Gateways G1 ist jedoch noch unbekannt. Zur Erfassung der Topologie unterhalb des gefundenen Gateways G1 triggert das Steuersoftwaremodul 107 in Schritt 306 einen Scan des Adressraums des Gateways G1. Das Steuersoftwaremodul 107 ist dazu ausgelegt, für jedes gefundene Gatewaygerät selbsttätig einen Scan des Adressraums des Gatewaygeräts zu initiieren. Die Initiierung dieses Scanvorgangs erfolgt daher selbsttätig und ohne weitere Rückfrage beim Benutzer 300. Während des Scannens des Adressraums des Gatewaygeräts G1 werden das Gatewaygerät G1.1 und das Feldgerät F2 gefunden. Als nächstes werden die Gerätespezifikationen des Gatewaygeräts G1.1 und des Feldgeräts F2 abgefragt, anschließend werden für die beiden Geräte geeignete Treiber bzw. DTMs instanziiert. In Schritt 307 wird von der Rahmenapplikation 301 ein Gateway-DTM für das Gatewaygerät G1.1 instanziiert, und in Schritt 308 wird ein Geräte-DTM für das Feldgerät F2 instanziiert.

Nach dem Schritt 308 ist die Topologie des Feldbusnetzwerks 100 bis zum Gatewaygerät G1.1 hin bekannt. Die Struktur unterhalb des Gatewaygeräts G1.1 ist jedoch noch unbekannt. Insofern wird vom Steuersoftwaremodul 107 im Schritt 309 ein Scan des Adressraums von Gateway G1.1 angestoßen. Bei diesem Scan werden die Feldgeräte F3 und F4 gefunden. Nachdem die Gerätespezifikationen der gefundenen Feldgeräte F3 und F4 abgefragt wurden, wird in Schritt 310 von der Rahmenapplikation 301 ein geeigneter Geräte-DTM für das Feldgerät F3 instanziiert, und in Schritt 311 wird ein Geräte-DTM für das Feldgerät F4 instanziiert.

Beim zuletzt durchgeführten Scan des Adressraums von Gatewaygerät G1.1 wurden lediglich Feldgeräte gefunden, aber keine Gatewaygeräte mehr. Insofern ist klar, dass man am Ende eines Astes des verzweigten Feldbusnetzwerks 100 angekommen ist. Man hat also sozusagen die "Blätter" des Verzweigungsbaums erreicht. Nachdem es im Feldbusnetzwerk 100 keine weiteren zu scannenden Äste gibt, teilt die Rahmenapplikation 301 dem Benutzer 300 in Schritt 312 mit, dass der Scanvorgang für das gesamte Feldbusnetzwerk 100 abgeschlossen ist.

Mittels des in Fig. 3 gezeigten automatisierten Scans eines kompletten Feldbusnetzwerks 100 ist es möglich, Feldbusnetzwerke ohne Rückfrage beim Benutzer 300 in einem Durchlauf zu analysieren und die Topologie des jeweiligen Feldbusnetzwerks zu erfassen. Die so erlangte Information über die Topologie des Feldbusnetzwerks kann wie in Fig. 3 gezeigt dazu verwendet werden, jeweils geeignete Geräte-DTMs bzw. Gateway-DTMs für die gefundenen Geräte zu instanziieren. Auf diese Weise wird während des Scanvorgangs selbsttätig eine passende hierarchische DTM-Struktur innerhalb der Rahmenapplikation 301 angelegt.

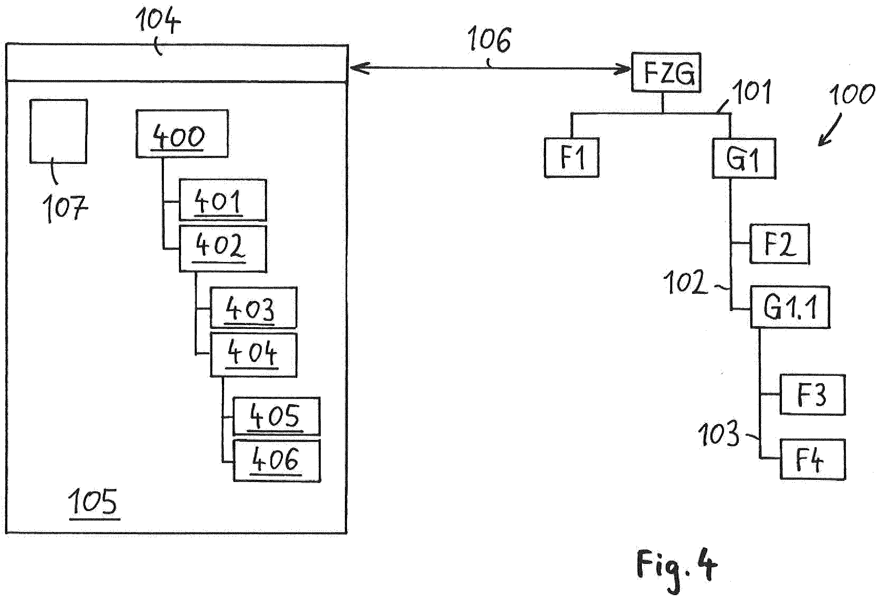

In Fig. 4 ist das bereits in Fig. 1 gezeigte Feldbusnetzwerk 100 noch einmal mit fertig aufgesetzter Gerätezugriffssoftware 105 gezeigt. Zu erkennen ist auch das Steuersoftwaremodul 107, das dazu ausgelegt ist, automatisch die verschiedenen notwendigen Scanoperationen anzustoßen und für jede der gefundenen Komponenten einen passenden Treiber bzw. DTM in der Gerätezugriffssoftware 105 zu instanziieren. Jeweils dann, wenn das Steuersoftwaremodul 107 beim Scannen ein weiteres Gatewaygerät findet, wird vom Steuersoftwaremodul 107 automatisch ein Scan des Adressraums dieses Gatewaygeräts angestoßen. Mittels des in Fig. 3 beschriebenen Verfahrens wird innerhalb der Gerätezugriffssoftware 105 eine Hierarchie von Treibern bzw. DTMs aufgesetzt, die spiegelbildlich der Struktur des Feldbusnetzwerks 100 entspricht. An oberster Stelle der DTM-Hierarchie befindet sich der Kommunikations-DTM 400. In der Hierarchieebene unterhalb des Kommunikations-DTMs 400 befinden sich der Geräte-DTM 401 für das Feldgerät F1 und der Gateway-DTM 402 für das Gatewaygerät G1. Darunter befinden sich der Geräte-DTM 403 für das Feldgerät F2 und der Gateway-DTM 404 für das Gatewaygerät G1.1. Auf der untersten Ebene der DTM-Hierarchie sind die beiden Gerätetreiber 405 und 406 für die beiden Feldgeräte F3 und F4 angeordnet.

Mit Hilfe dieser hierarchischen Treiberstruktur kann auf jedes Feldgerät und jedes Gatewaygerät des Feldbusnetzwerks 100 zugegriffen werden. Dabei wird das Scannen der Feldbustopologie und das Instanziieren der Treiber bzw. DTMs selbsttätig und vollautomatisch von dem Steuersoftwaremodul 107 entsprechend dem in Fig. 3 dargestellten Ablaufschema durchgeführt.

In der bisherigen Darstellung wurde eine Rahmenapplikation des Standards FDT (Field Device Tool) beschrieben. In diese FDT-Rahmenapplikation können Treiber des Formats DTM (Device Type Manager) zu verschiedenen Geräten und von unterschiedlichen Herstellern eingebunden werden. Der FDT-Standard wird in den nächsten Jahren zunehmend durch den Standard FDI Device Packages ergänzt.

Neben den Standards FDT/DTM und FDI Device Packages gibt es noch eine Vielzahl anderer Standards für Gerätebeschreibungsdateien und Treiber. Zu nennen wären beispielsweise die Standards DD (Device Description) und EDD (Enhanced Device Description). Insbesondere bei dem Standard EDD werden zusätzlich zu Geräteparametern, Gerätefunktionalität und Adressraumbelegung auch Grafikfeatures und grafische Benutzeroberflächen spezifiziert, die die Parametrierung und Konfigurierung des jeweiligen Feldgeräts erleichtern sollen.

Daneben gewinnen die sogenannten Industrial Ethernet-Protokolle an Bedeutung, zu denen u.a. die Feldbusprotokolle EtherNet/IP, Profinet und EtherCAT gehören. Für diese Industrial Ethernet Protokolle gibt es spezielle Gerätebeschreibungsdateien. Beispielsweise ist beim Feldbusprotokoll EtherNet/IP eine Gerätebeschreibungsdatei entsprechend dem Standard EDS (Electronic Data Sheet) zur Beschreibung sowohl des zyklischen als auch des azyklischen Datenaustauschs vorgesehen.

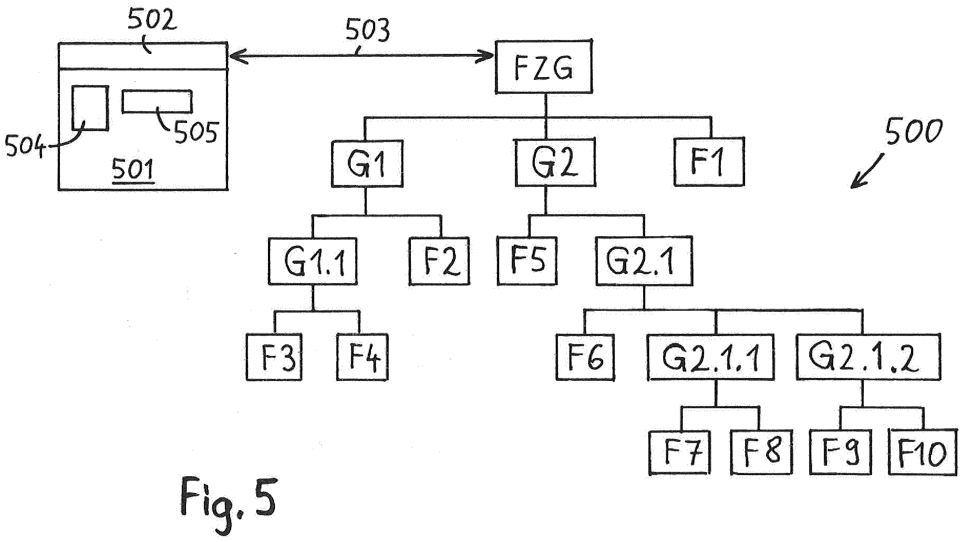

Das in Fig. 3 vorgestellte Scanverfahren eignet sich insbesondere auch zum vollautomatischen Scannen von komplexen verschachtelten Feldbustopologien. Dabei können mittels einer Vielzahl von Scanoperationen die Strukturen des Feldbusnetzwerks mit seinen Verzweigungen und Verästelungen erfasst werden. Für die Darstellung, wie das Scanverfahren nacheinander die verschiedenen Feldbussegmente abarbeitet, ist in Fig. 5 ein Beispiel eines komplexen verschachtelten Feldbusnetzwerks 500 gezeigt. Der Zugriff auf das Feldbusnetzwerk 500 erfolgt dabei über ein Feldzugangsgerät FZG, das sich an der obersten Stelle der Feldbushierarchie befindet. Eine Gerätezugriffssoftware 501, mit der auf die verschiedenen Geräte und Komponenten des Feldbusnetzwerks 500 zugegriffen werden kann, ist auf einem Host 502 installiert, der über eine Ethernetverbindung 503 mit dem Feldzugangsgerät FZG und dem Feldbusnetzwerk 500 in Verbindung steht. Die Gerätezugriffssoftware 501 umfasst ein Steuersoftwaremodul 504, das dazu ausgelegt ist, nacheinander eine Mehrzahl von unterschiedlichen Scanoperationen anzustoßen, um auf diese Weise nach und nach die komplette Topologie des Feldbusnetzwerks 500 zu erfassen. Zu jedem gefundenen Gerät bzw. jeder gefundenen Komponente des Feldbusnetzwerks 500 wird ein zugehöriger Treiber bzw. DTM in die DTM-Hierarchie der Gerätezugriffssoftware 501 eingebunden. Begonnen wird dabei mit der Instanziierung des Kommunikations-DTM 505, der dem Feldzugangsgerät FZG zugeordnet ist.

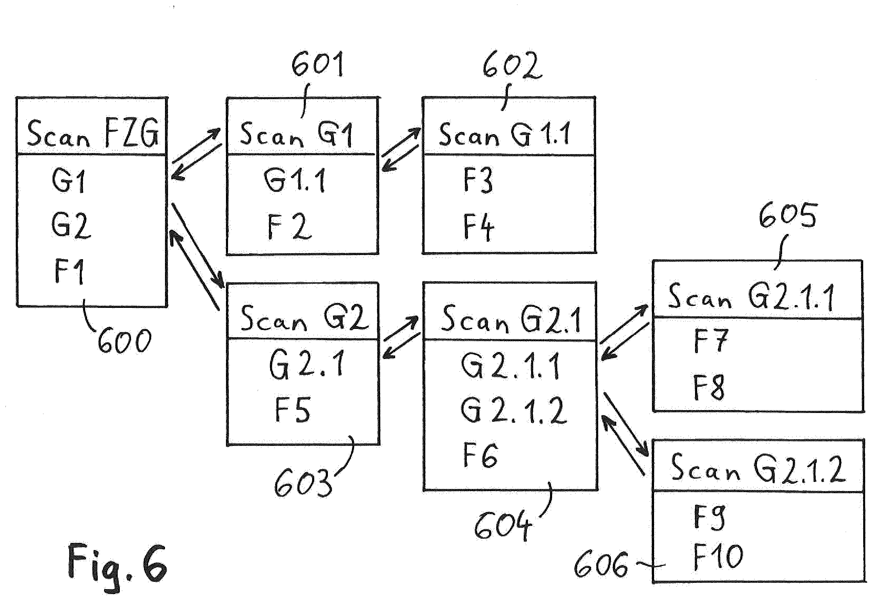

Anhand von Fig. 6 soll im Folgenden beschrieben werden, wie sich das in Fig. 3 beschriebene Scanverfahren durch die verschiedenen Äste und Feldbussegmente des verzweigten Feldbusnetzwerks 500 durcharbeitet und dabei nacheinander ein Feldbussegment nach dem anderen erfasst. Als Erstes initiiert das Steuersoftwaremodul 504 einen Scan 600 des Adressraums des Feldzugangsgeräts FZG. Dabei werden die Gatewaygeräte G1 und G2 und das Feldgerät F1 gefunden. Zur Bestimmung der Topologie unterhalb des Gatewaygeräts G1 veranlasst das Steuersoftwaremodul 504 daraufhin einen Scan 601 des Adressraums des Gatewaygeräts G1. Dabei werden das Gatewaygerät G1.1 und das Feldgerät F2 gefunden. Daraufhin wird ein Scan 602 des Adressraums des Gatewaygeräts G1.1 durchgeführt, und bei diesem Scan 602 werden die beiden Feldgeräte F3 und F4 gefunden. Da bei dem Scan 602 lediglich Feldgeräte gefunden werden, ist jetzt das Ende dieses Astes des Feldbusnetzwerks 500 erreicht, und der Topologiescan kehrt zu höheren Hierarchieebenen des Feldbusnetzwerks 500 zurück. Da der Scan 601 nur den einen Gateway G1.1 geliefert hat, kehrt der Topologiescan zum Ergebnis des Scans 600 zurück und macht dort beim zweiten Gatewaygerät G2 weiter. Bei dem Scan 603 wird der Adressraum des Gatewaygeräts G2 gescannt, und dabei werden das Gatewaygerät G2.1 und das Feldgerät F5 ermittelt. Daraufhin wird der Adressraum des Gatewaygeräts G2.1 mit einem weiteren Scan 604 untersucht. Dabei werden die beiden Gatewaygeräte G2.1.1 und G2.1.2 und das Feldgerät F6 gefunden. Um die Topologie unterhalb des Gatewaygeräts G2.1.1 zu erfassen, wird ein Scan 605 des Adressraums von Gatewaygerät G2.1.1 durchgeführt. Bei diesem Scan 605 werden die beiden Feldgeräte F7 und F8 gefunden, so dass hier das Ende des jeweiligen Astes erreicht ist. Der Topologiescan kehrt daraufhin zurück zum Ergebnis des Scans 604, bei dem zusätzlich zum bereits untersuchten Gatewaygerät G2.1.1 außerdem auch ein zweites Gatewaygerät G.2.1.2 gefunden wurde. Zu diesem Gatewaygerät G.2.1.2 initiiert das Steuersoftwaremodul 504 dann einen Scan 606. Bei diesem Scan 606 werden die beiden Feldgeräte F9 und F10 gefunden, so dass jetzt auch hier das Ende des Astes erreicht ist. Der Topologiescan kehrt zurück zum Suchergebnis des Scans 604 und stellt fest, dass dort keine weiteren zu untersuchenden Gatewaygeräte vorhanden sind. Daraufhin kehrt der Topologiescan zurück zum Suchergebnis des Scans 603 und stellt fest, dass auch hier keine weiteren zu untersuchenden Gatewaygeräte mehr vorhanden sind. Daraufhin kehrt der Topologiescan zurück zum Suchergebnis des Scans 600, mit dem der Adressraum des Feldzugangsgeräts FZG untersucht worden war. Die beiden gefundenen Gatewaygeräte G1 und G2 sind bereits abgearbeitet, ein weiteres Gatewaygerät gibt es nicht. Insofern ist der Topologiescan jetzt abgeschlossen.

Das Steuersoftwaremodul hat jetzt die Topologie des Feldbusnetzwerks 500 vollständig durchgescannt, wobei insgesamt zum Durchscannen der Topologie sieben nacheinander selbsttätig angestoßene Scans 600-606 erforderlich waren, die durch das Steuersoftwaremodul 500 nacheinander angestoßen wurden.

Bei dem in Fig. 5 und Fig. 6 gezeigten Beispiel wurde der komplette Anlagenbaum ausgehend vom Kommunikations-DTM 505 mit Hilfe der nacheinander durchgeführten Scans 600-606 vollständig gescannt. Mit Hilfe dieser Scans 600-606 konnte die vollständige hierarchische Anordnung der verschiedenen Feldgerät und Gatewaygeräte des Feldbusnetzwerks 500 vollkommen selbsttätig erfasst werden, ohne dass hierfür eine Interaktion mit dem Benutzer erforderlich gewesen ist.

Alternativ dazu kann der automatische Topologiescan jedoch auch nur für einen Teilbereich des Anlagenbaums durchgeführt werden, wobei bei einem Gateway-DTM zu einem bestimmten Gatewaygerät gestartet wird. Beispielsweise könnte in Fig. 5 der Teilbereich des Anlagenbaums unterhalb des Gatewaygeräts G2.1 gescannt werden. Zur Erfassung der Topologie des Teilbereichs unterhalb des Gatewaygeräts G2.1 würden lediglich die in Fig. 6 gezeigten Scans 604, 605 und 606 durchgeführt werden. Auf diese Weise könnte man ausgehend von dem zum Gatewaygerät G2.1 gehörigen Gateway-DTM die Topologie unterhalb des Gatewaygeräts G2.1 erfassen.

Gemäß einer weiteren Möglichkeit könnte der Topologiescan entsprechend von Regeln durchgeführt werden, die der Benutzer vorab festlegt. Beispielsweise könnte der Benutzer einen Topologiescan für das in Fig. 5 gezeigte Feldbusnetzwerk 500 durchführen und dabei vorgeben, dass die Topologie nur bis zu einer Tiefe von zwei Hierarchieebenen erfasst werden soll. Dies könnte beispielsweise dann sinnvoll sein, wenn sich der Benutzer lediglich einen Überblick über die Struktur der Anlage verschaffen will. In diesem Fall würden die Scanoperationen bis zur zweiten Hierarchieebene unterhalb des Feldzugangsgeräts FZG durchgeführt werden, wobei in der zweiten Hierarchieebene die Komponenten G1.1, F2, F5 und G2.1 ermittelt würden. An dieser Stelle würde der Scan jeweils abgebrochen, so dass die Struktur unterhalb der Gatewaygeräte G1.1 und G2.1 nicht mehr erfasst würde. Von den in Fig. 6 gezeigten Scanoperationen würde man also lediglich die Scans 600, 601 und 603 durchführen und die restlichen in Fig. 6 gezeigten Scans weglassen.

Die vom Benutzer aufgestellten Regeln zur Durchführung des Topologiescans könnten sich beispielsweise auch darauf beziehen, von welchem Hersteller die verschiedenen Komponenten des Feldbusnetzwerks 500 stammen. Beispielsweise könnte der Benutzer einen Topologiescan aufsetzen, bei dem nur den Knoten eines bestimmten Hersteller gefolgt wird, während die Knoten anderer Hersteller beim Scanvorgang ignoriert werden.

Hervorzuheben ist darüber hinaus, dass ein Topologiescan zur Erfassung der Struktur des Feldbusnetzwerks 500 nicht notwendigerweise in einem einzigen Durchgang durchgeführt werden muss. Es ist vielmehr auch möglich, einen noch nicht fertiggestellten Topologiescan an einer bestimmten Stelle zu unterbrechen und zu einem späteren Zeitpunkt an dieser Stelle wieder fortzusetzen. Insbesondere umfangreiche Feldbusnetzwerke können so in mehreren Schritten gescannt werden.

Der in Fig. 5 und Fig. 6 gezeigte Topologiescan kann zur Erfassung einer noch unbekannten Netzwerktopologie eingesetzt werden. Alternativ dazu ist es jedoch auch möglich, den Topologiescan zum Abgleich bzw. zur Verifikation einer bereits zu einem früheren Zeitpunkt erfassten Topologie einzusetzen. Durch einen derartigen Abgleich des aktuellen Topologiezustands mit einem früheren Topologiezustand können insbesondere neu hinzugekommene Komponenten oder früher vorhandene und jetzt weggefallene Komponenten erfasst und hervorgehoben werden. Dies kann als Basis für eine Aktualisierung der Treiberstruktur in der Gerätezugriffssoftware dienen. Dabei werden nicht mehr benötigte Treiber entfernt, während neue Treiber für die neu hinzugekommenen Komponenten in die FDT-Rahmenapplikation eingefügt werden.

## Patentansprüche

1. Verfahren zum automatisierten Erfassen einer Topologie eines Feldbusnetzwerks (100, 500) von einer Gerätezugriffssoftware (105, 501) aus, wobei die Gerätezugriffssoftware auf einem Host (104, 502) installiert ist, der mit dem Feldbusnetzwerk (100, 500) in Datenverbindung steht, wobei das Feldbusnetzwerk (100, 500) eine Mehrzahl von Feldgeräten und Gatewaygeräten umfasst, **gekennzeichnet durch** folgende Schritte:
a) Scannen eines Adressraums eines Feldzugangsgeräts oder eines vorgegebenen Gatewaygeräts des Feldbusnetzwerks (100, 500) und Bestimmen von in diesem Adressraum vorhandenen Gatewaygeräten und Feldgeräten und anschließendes Abfragen von Gerätespezifikationen von den im Adressraum des Feldzugangsgeräts oder des vorgegebenen Gatewaygeräts vorhandenen Gatewaygeräten und Instanziieren von geeigneten Treibern für die in diesem Adressraum vorhandenen Gatewaygeräte und Feldgeräte in der Gerätezugriffssoftware,
b) für jedes gefundene Gatewaygerät, Scannen eines von dem gefundenen Gatewaygerät bereitgestellten weiteren Adressraums und Bestimmen von in dem weiteren Adressraum vorhandenen weiteren Gatewaygeräten und Feldgeräten und anschließendes Abfragen von Gerätespezifikationen von den in dem weiteren Adressraum vorhandenen weiteren Gatewaygeräten und Instanziieren von geeigneten Treibern für die in dem weiteren Adressraum vorhandenen weiteren Gatewaygeräte und Feldgeräte in der Gerätezugriffssoftware,
c) Wiederholen von Schritt b) für jedes weitere gefundene Gatewaygerät, bis sämtliche im Bereich unterhalb des Feldzugangsgeräts oder des vorgegebenen Gatewaygeräts im Feldbusnetzwerk (100, 500) vorhandenen Gatewaygeräte gefunden sind oder bis eine Abbruchbedingung erfüllt ist,
wobei ein Instanziieren von geeigneten Treibern umfasst:
- Vergleichen von mindestens einem zur Verfügung stehenden Gerätetreiber mit den abgefragten Gerätespezifikationen und Bestimmung eines Qualitätswerts des Gerätetreibers ausgehend von den Abweichungen der Treiber zu dem gefundenen Gatewaygerät oder Feldgerät in Hinblick auf die Hardware- Software- oder Protokollversion,
- Im Falle, dass der Qualitätswert des Gerätetreibers oberhalb eines vorgegebenen Grenzwerts liegt, automatisches Instanziieren des Gerätetreibers und Einbinden des Gerätetreibers in die Rahmenapplikation.

2. Verfahren nach Anspruch 1, **dadurch gekennzeichnet, dass** das Verfahren dazu ausgelegt ist, die Topologie des Feldbusnetzwerks im Bereich unterhalb des Feldzugangsgeräts oder des vorgegebenen Gatewaygeräts zu erfassen.

3. Verfahren nach Anspruch 1 oder Anspruch 2, **dadurch gekennzeichnet, dass** in die Gerätezugriffssoftware geeignete Treiber für Gatewaygeräte und Feldgeräte des Feldbusnetzwerks einbindbar sind.

4. Verfahren nach einem der Ansprüche 1 bis 3, **gekennzeichnet durch** mindestens einen der folgenden zusätzlichen Schritte:
- im Anschluss an Schritt a), Abfragen von Gerätespezifikationen von den im Adressraum des Feldzugangsgeräts oder des vorgegebenen Gatewaygeräts vorhandenen Gatewaygeräten;
- im Anschluss an Schritt a), Abfragen von Gerätespezifikationen von den im Adressraum des Feldzugangsgeräts oder des vorgegebenen Gatewaygeräts vorhandenen Feldgeräten;
- im Anschluss an Schritt b), Abfragen von Gerätespezifikationen von den in dem weiteren Adressraum vorhandenen weiteren Gatewaygeräten;
- im Anschluss an Schritt b), Abfragen von Gerätespezifikationen von den in dem weiteren Adressraum vorhandenen weiteren Feldgeräten.

5. Verfahren nach Anspruch 1 oder Anspruch 4, **dadurch gekennzeichnet, dass** die von den Gatewaygeräten und Feldgeräten abgefragten Gerätespezifikationen eines oder mehrere von folgenden umfassen: Hersteller-ID, Geräte-ID, Protokollversion oder Command Revision, Geräteversion oder Device Revision, Softwareversion oder Software Revision, Geräteprofil oder Profile Revision.

6. Verfahren nach Anspruch 1, **dadurch gekennzeichnet, dass** für den Fall, dass der mindestens eine zur Verfügung stehende Gerätetreiber nicht hinreichend gut mit den abgefragten Gerätespezifikationen übereinstimmt, ein geeigneter Gerätetreiber durch den Benutzer manuell ausgewählt wird.

7. Verfahren nach einem der Ansprüche 1 bis 6, **dadurch gekennzeichnet, dass** auf Seiten der Gerätezugriffssoftware ein oder mehrere der folgenden Schritte ausgeführt werden:
- Erzeugen eines Scanbefehls für den Adressraum des Feldzugangsgeräts oder des vorgegebenen Gatewaygeräts und Übermitteln des Scanbefehls an das Feldzugangsgerät oder das vorgegebene Gatewaygerät;
- Erzeugen eines Scanbefehls für den von einem gefundenen Gatewaygerät bereitgestellten weiteren Adressraum und Übermitteln des Scanbefehls an das gefundene Gatewaygerät;
- Auswerten eines vom Feldzugangsgerät oder vom vorgegebenen Gatewaygerät erhaltenen Scanergebnisses;
- Auswerten von Scanergebnissen, die von den gefundenen Gatewaygeräten erhalten werden.

8. Verfahren nach einem der Ansprüche 1 bis 7, **dadurch gekennzeichnet, dass** die Gerätezugriffssoftware ein Steuersoftwaremodul umfasst, und/oder dass die Gatewaygeräte des Feldbusnetzwerks mindestens eines von folgenden umfassen:
- einen oder mehrere Remote-IOs;
- einen oder mehrere Gateways;
- ein oder mehrere Links;
- ein oder mehrere Koppler;
- einen oder mehrere Protokollumsetzer;
- ein oder mehrere Multiplexer, und/oder
dass mindestens eines der Gatewaygeräte zwei oder mehr Kanäle aufweist, wobei über jeden der Kanäle ein Subadressraum adressierbar ist, und wobei das Scannen des Adressraums des mindestens einen Gatewaygeräts das Scannen der Subadressräume umfasst.

9. Verfahren nach Anspruch 8, **gekennzeichnet durch** mindestens eines von folgenden:
- durch das Steuersoftwaremodul wird das Scannen des Adressraums des Feldzugangsgeräts oder des vorgegebenen Gatewaygeräts automatisch angestoßen;
- durch das Steuersoftwaremodul wird ein Scanbefehl für den Adressraum des Feldzugangsgeräts oder des vorgegebenen Gatewaygeräts erzeugt und an das Feldzugangsgerät oder das vorgegebene Gatewaygerät übermittelt;
- durch das Steuersoftwaremodul wird das Scannen des von einem gefundenen Gatewaygerät bereitgestellten weiteren Adressraums automatisch angestoßen;
- durch das Steuersoftwaremodul wird ein Scanbefehl für den von einem gefundenen Gatewaygerät bereitgestellten weiteren Adressraum erzeugt und an das gefundene Gatewaygerät übermittelt;
- durch das Steuersoftwaremodul wird ein vom Feldzugangsgerät oder vom vorgegebenen Gatewaygerät erhaltenes Scanergebnis ausgewertet;
- durch das Steuersoftwaremodul werden von den gefundenen Gatewaygeräten erhaltene Scanergebnisse ausgewertet;
- durch das Steuersoftwaremodul werden im Anschluss an Schritt a) automatisch Gerätespezifikationen von den im Adressraum des Feldzugangsgeräts oder des vorgegebenen Gatewaygeräts vorhandenen Gatewaygeräten abgefragt;
- durch das Steuersoftwaremodul werden im Anschluss an Schritt b) automatisch Gerätespezifikationen von den in dem weiteren Adressraum vorhandenen weiteren Gatewaygeräten abgefragt.

10. Verfahren nach einem der Ansprüche 1 bis 9, **gekennzeichnet durch** mindestens eines von folgenden:
- eine Durchsuchung des Feldbusnetzwerks wird nur bis zu einer vorgebbaren Tiefe unterhalb des Feldzugangsgeräts oder des vorgegebenen Gatewaygeräts ausgeführt;
- eine Durchsuchung des Feldbusnetzwerks wird an dem Feldzugangsgerät oder an dem vorgegebenen Gatewaygerät des Feldbusnetzwerks begonnen;
- eine Durchsuchung des Feldbusnetzwerks wird nur für Feldgeräte oder Gatewaygeräte eines bestimmten Herstellers durchgeführt;
- ein Ergebnis der Erfassung der Topologie des Feldbusnetzwerks wird mit einer gespeicherten früheren Version der Topologie des Feldbusnetzwerks verglichen und eventuelle Veränderungen gegenüber der früheren Version werden hervorgehoben.

11. Verfahren nach einem der Ansprüche 1 bis 10, **gekennzeichnet durch** mindestens eines von folgenden:
- bei der Gerätezugriffssoftware handelt es sich um eine Rahmenapplikation entsprechend dem Standard FDT;
- bei der Gerätezugriffssoftware handelt es sich um eine Rahmenapplikation entsprechend dem Standard FDT, wobei in die Rahmenapplikation Treiber entsprechend dem Standard DTM einfügbar sind;
- bei der Gerätezugriffssoftware handelt es sich um eine Rahmenapplikation entsprechend dem Standard FDT, wobei in die Rahmenapplikation Kommunikations-DTMs, Gateway-DTMs und Geräte-DTMs einfügbar sind;
- die Gerätezugriffssoftware ist für Gerätebeschreibungsdateien oder Treiber entsprechend von mindestens einem der folgenden Standards ausgelegt: DTM, DD, EDD, EDL, FDI;
- innerhalb des Feldbusnetzwerks werden ein oder mehrere der folgenden Feldbusprotokolle verwendet: Fieldbus Foundation, HART, Profibus, Modbus, CANopen, IO-Link, EtherCAT, Interbus, Profinet, Profinet IO, DeviceNet, CompoNet, andere Industrial Ethernet Protokolle und andere Feldbusprotokolle.

12. Ein Steuersoftwaremodul (107, 504) zum automatisierten Erfassen einer Topologie eines Feldbusnetzwerks (100, 500) von einer Gerätezugriffssoftware (105, 501) aus, wobei die Gerätezugriffssoftware (105, 501) auf einem Host (104, 502) installiert ist, der mit dem Feldbusnetzwerk (100, 500) in Datenverbindung steht, wobei das Steuersoftwaremodul (107, 504) in die Gerätezugriffssoftware (105, 501) einbindbar ist, wobei das Feldbusnetzwerk (100, 500) eine Mehrzahl von Feldgeräten und Gatewaygeräten umfasst, und wobei das Steuersoftwaremodul (107, 504) dazu ausgelegt ist,
- einen Scanvorgang (600) zum Scannen eines Adressraums eines Feldzugangsgeräts oder eines vorgegebenen Gatewaygeräts des Feldbusnetzwerks (100, 500) anzustoßen und in diesem Adressraum vorhandene Gatewaygeräte und Feldgeräte zu bestimmen und anschließend Gerätespezifikationen von den im Adressraum des Feldzugangsgeräts oder des vorgegebenen Gatewaygeräts vorhandenen Gatewaygeräten abzufragen und geeigneten Treibern für die in diesem Adressraum vorhandenen Gatewaygeräte und Feldgeräte in der Gerätezugriffssoftware zu instanziieren,
- zu jedem gefundenen Gatewaygerät einen weiteren Scanvorgang (601, 603) zum Scannen eines von dem gefundenen Gatewaygerät bereitgestellten weiteren Adressraums anzustoßen und in dem weiteren Adressraum vorhandene weitere Gatewaygeräte und Feldgeräte zu bestimmen und anschließend Gerätespezifikationen von den in dem weiteren Adressraum vorhandenen weiteren Gatewaygeräten abzufragen und geeigneten Treibern für die in dem weiteren Adressraum vorhandenen weiteren Gatewaygeräte und Feldgeräte in der Gerätezugriffssoftware zu instanziieren, und
- den letzten Vorgang für jedes weitere gefundene Gatewaygerät zu wiederholen, bis sämtliche im Bereich unterhalb des Feldzugangsgeräts oder des vorgegebenen Gatewaygeräts im Feldbusnetzwerk (100, 500) vorhandenen Gatewaygeräte gefunden sind oder bis eine Abbruchbedingung erfüllt ist,
wobei ein Instanziieren von geeigneten Treibern umfasst:
- Vergleichen von mindestens einem zur Verfügung stehenden Gerätetreiber mit den abgefragten Gerätespezifikationen und Bestimmung eines Qualitätswerts des Gerätetreibers ausgehend von den Abweichungen der Treiber zu dem gefundenen Gatewaygerät oder Feldgerät in Hinblick auf die Hardware- Software- oder Protokollversion,
- Im Falle, dass der Qualitätswert des Gerätetreibers oberhalb eines vorgegebenen Grenzwerts liegt, automatisches Instanziieren des Gerätetreibers und Einbinden des Gerätetreibers in die Rahmenapplikation.

13. Eine Gerätezugriffssoftware (105, 501), die dazu ausgelegt ist, auf Geräte eines Feldbusnetzwerks (100, 500) zuzugreifen,
wobei die Gerätezugriffssoftware (105, 501) ein Steuersoftwaremodul (107, 504) nach Anspruch 12 umfasst.

## Claims

1. Procedure for the automatic capture of a topology of a fieldbus network (100, 500) by a device access software (105, 501), wherein the device access software is installed on a host (104, 502), which is connected via a data connection to the fieldbus network (100, 500), wherein the fieldbus network (100, 500) comprises multiple field devices and gateway devices, **characterized by** the following steps:
a) scanning of an address range of a field access device or a predefined gateway device of the fieldbus network (100, 500) and determination of the gateway devices and field devices present in this address range, and subsequent interrogation of device specifications of the gateway devices present in the address range of the field access device or the predefined gateway device and instantiation of suitable drivers in the device access software for the gateway devices and field devices present in this address range,
b) for each gateway device that is found, scanning of another address range provided by the gateway device found and determination of additional gateway devices and field devices present in the additional address range, and subsequent interrogation of device specifications of the additional gateway devices present in the additional address range and instantiation of suitable drivers in the device access software for the additional gateway devices and field devices present in this address range,
c) repetition of step b) for each additional gateway device found until all the gateway devices present in the range below the field access device or the predefined gateway device are found in the fieldbus network (100, 500), or until a cancellation condition is met,
wherein an instantiation of suitable drivers comprises:
- the comparison of at least one device driver available with the interrogated device specifications and determination of a quality value of the device driver based on the deviations of the drivers, in relation to the gateway device or the field device found, with regard to the hardware, software or protocol version,
- in the event that the quality value of the device driver is above a predefined limit value, automatic instantiation of the device driver and integration of the device driver into the frame application.

2. Procedure as claimed in Claim 1, **characterized in that** the procedure is designed to capture the topology of the fieldbus network in the range below the field access device or the predefined gateway device.

3. Procedure as claimed in Claim 1 or 2, **characterized in that** suitable drivers for gateway devices and field devices of the fieldbus network can be integrated into the device access software.

4. Procedure as claimed in one of the Claims 1 to 3, **characterized by** at least one of the following additional steps:
- after step a), interrogation of device specifications of the gateway devices present in the address range of the field access device or the predefined gateway device;
- after step a), interrogation of device specifications of the field devices present in the address range of the field access device or the predefined gateway device;
- after step b), interrogation of device specifications of the additional gateway devices present in the additional address range;
- after step b), interrogation of device specifications of the additional field devices present in the additional address range.

5. Procedure as claimed in Claim 1 or Claim 4, **characterized in that** the device specifications interrogated from the gateway devices and field devices comprise one or more of the following elements: manufacturer ID, device ID, protocol version or Command Revision, device version or Device Revision, software version or Software Revision, device profile or Profile Revision.

6. Procedure as claimed in Claim 1, **characterized in that** in the event that the at least one device driver available does not sufficiently match the interrogated device specifications, a suitable device driver is selected manually by the user.

7. Procedure as claimed in one of the Claims 1 to 6, **characterized in that** one or more of the following steps are performed on the side of the device access software:
- Generation of a scan command for the address range of the field access device or the predefined gateway device and transmission of the scan command to the field access device or the predefined gateway device;
- Generation of a scan command for the additional address range provided by a gateway device that is found and transmission of the scan command to the gateway device found;
- Evaluation of a scan result obtained from the field access device or the predefined gateway device;
- Evaluation of scan results that are obtained from the gateway devices found.

8. Procedure as claimed in one of the Claims 1 to 7, **characterized in that** the device access software comprises a control software module, and/or **in that** the gateway devices of the fieldbus network comprise at least one of the following:
- one or more remote IOs;
- one or more gateways;
- one or more links;
- one or more couplers;
- one or more protocol converters;
- one or more multiplexers, and/or
**in that** at least one of the gateway devices has two or more channels, wherein a sub-address range can be addressed via each of the channels, and wherein the scanning of the address range of the at least one gateway device comprises the scanning of the sub-address ranges.

9. Procedure as claimed in Claim 8, **characterized by** at least one of the following points:
- the scanning of the address range of the field access device or the predefined gateway device is triggered automatically by the control software module;
- a scan command for the address range of the field access device or the predefined gateway device is generated by the control software module, and transmitted to the field access device or the predefined gateway device;
- the scanning of the additional address range provided by the gateway device that is found is triggered automatically by the control software module;
- a scan command for the additional address range provided by a gateway device that is found is generated by the control software module, and transmitted to the gateway device found;
- a scan result obtained from the field access device or the predefined gateway device is evaluated by the control software module;
- scan results obtained from the gateway devices found are evaluated by the control software module;
- after step a), the control software module automatically queries device specifications from the gateway devices present in the address range of the field access device or the predefined gateway device;
- after step b), the control software module automatically queries device specifications from the additional gateway devices present in the additional address range.

10. Procedure as claimed in one of the Claims 1 to 9, **characterized by** at least one of the following points:
- an analysis of the fieldbus network is only performed up to a predefinable depth below the field access device or the predefined gateway device;
- an analysis of the fieldbus network is started on the field access device or on the predefined gateway device of the fieldbus network;
- an analysis of the fieldbus network is only performed for field devices or gateway devices of a certain manufacturer;
- a result of capturing the topology of the fieldbus network is compared against a saved, earlier version of the topology of the fieldbus network and any changes in relation to the earlier version are highlighted.

11. Procedure as claimed in one of the Claims 1 to 10, **characterized by** at least one of the following points:
- the device access software is a frame application according to the FDT standard;
- the device access software is a frame application according to the FDT standard, wherein drivers according to the DTM standard can be incorporated into the frame application;
- the device access software is a frame application according to the FDT standard, wherein communication DTMs, gateway DTMs and device DTMs can be incorporated into the frame application;
- the device access software is designed for device description files or drivers according to at least one of the following standards: DTM, DD, EDD, EDL, FDI;
- one or more of the following fieldbus protocols are used within the fieldbus network: Fieldbus Foundation, HART, Profibus, Modbus, CANopen, IO-Link, EtherCAT, Interbus, Profinet, Profinet 10, DeviceNet, CompoNet, other Industrial Ethernet protocols and other fieldbus protocols.

12. A control software module (107, 504) designed to automatically capture a topology of a fieldbus network (100, 500) using a device access software (105, 501), wherein the device access software (105, 501) is installed on a host (104, 502), which is connected via a data connection to the fieldbus network (100, 500), wherein the control software module (107, 504) can be integrated into the device access software (105, 501), wherein the fieldbus network (100, 500) comprises a multitude of field devices and gateway devices, and wherein the control software module (107, 504) is designed to
- trigger a scanning process (600) to scan an address range of a field access device or a predefined gateway device of the fieldbus network (100, 500) and to determine gateway devices and field devices present in this address range, and then query device specifications from gateway devices present in the address range of the field access device or the predefined gateway device and to instantiate suitable drivers in the device access software for gateway devices and field devices present in this address range,
- trigger an additional scanning process (601, 603) for each gateway device found, said process being designed to scan an additional address range provided by the gateway device found and to determine additional gateway devices and field devices present in the additional address range, and to subsequently query device specifications from the additional gateway devices present in the additional address range and to instantiate suitable drivers in the device access software for the additional gateway devices and field devices present in the additional address range,
and
- repeat the last process for each additional gateway device found until all the gateway devices present in the range below the field access device or the predefined gateway device are found in the fieldbus network (100, 500) or until a cancellation condition is met,
wherein an instantiation of suitable drivers comprises:
- the comparison of at least one device driver available with the interrogated device specifications and determination of a quality value of the device driver based on the deviations of the drivers, in relation to the gateway device or field device found, with regard to the hardware, software or protocol version,
- in the event that the quality value of the device driver is above a predefined limit value, automatic instantiation of the device driver and integration of the device driver in the frame application.

13. Device access software (105, 501), which is designed to access devices of a fieldbus network (100, 500),
wherein the device access software (105, 501) comprises a control software module (107, 504) as claimed in Claim 12.

## Revendications

1. Procédé destiné à l'acquisition d'une topologie d'un réseau de bus de terrain (100, 500) par un logiciel d'accès aux appareils (105, 501), le logiciel d'accès aux appareils étant installé sur un hôte (104, 502), lequel est en liaison de données avec le réseau de bus de terrain (100, 500), le réseau de bus de terrain (100, 500) comprenant une pluralité d'appareils de terrain et d'appareils passerelles, **caractérisé par** les étapes suivantes :
a) balayage d'une zone d'adresses d'un appareil d'accès au terrain ou d'un appareil passerelle prédéfini du réseau de bus de terrain (100, 500) et détermination de la présence d'appareils passerelles et d'appareils de terrain dans cette zone d'adresses, suivie de l'interrogation de spécifications d'appareils passerelles présents dans la zone d'adresses de l'appareil d'accès au terrain ou de l'appareil passerelle prédéfini et instanciation, dans le logiciel d'accès aux appareils, de pilotes appropriés pour les appareils passerelles et les appareils de terrain présents dans cette zone d'adresses,
b) pour chaque appareil passerelle trouvé, balayage d'une nouvelle zone d'adresses mise à disposition par l'appareil passerelle trouvé et détermination de la présence de nouveaux appareils passerelles et d'appareils de terrain présents dans la nouvelle zone d'adresses, suivie de l'interrogation de spécifications des nouveaux appareils passerelles présents dans la nouvelle zone d'adresses et instanciation, dans le logiciel d'accès aux appareils, de pilotes appropriés pour les appareils passerelles et les appareils de terrain présents dans la nouvelle zone d'adresses,
c) répétition de l'étape b) pour chaque nouvel appareil passerelle trouvé, jusqu'à ce que tous les appareils passerelles présents dans la zone sous l'appareil d'accès au terrain ou de l'appareil passerelle prédéfini au sein du réseau de bus de terrain (100, 500) soient trouvés, ou jusqu'à ce que la condition d'interruption soit remplie,
une instanciation de pilotes appropriés comprenant :
- la comparaison d'au moins un pilote d'appareil disponible avec les spécifications d'appareil interrogées et détermination d'une valeur de qualité du pilote d'appareil sur la base des écarts des pilotes, relatifs à l'appareil passerelle ou à l'appareil de terrain trouvé, en ce qui concerne la version de hardware, de software ou de protocole,
- dans le cas où la valeur de qualité du pilote d'appareil se situe au-dessus d'un seuil prédéfini, instanciation automatique du pilote d'appareil et intégration du pilote d'appareil dans l'application cadre.

2. Procédé selon la revendication 1, **caractérisé en ce que** le procédé est conçu pour acquérir la topologie du réseau de bus de terrain dans la zone sous l'appareil d'accès au terrain ou de l'appareil passerelle prédéfini.

3. Procédé selon la revendication 1 ou 2, **caractérisé en ce que** des pilotes appropriés sont intégrables dans le logiciel d'accès aux appareils pour les appareils passerelles et les appareils de terrain du réseau de bus de terrain.

4. Procédé selon l'une des revendications 1 à 3, **caractérisé par** l'une des étapes supplémentaires suivantes :
- après l'étape a), interrogation de spécifications d'appareils passerelles présents dans la zone d'adresses de l'appareil d'accès au terrain ou de l'appareil passerelle prédéfini ;
- après l'étape a), interrogation des spécifications d'appareils de terrain présents dans la zone d'adresses de l'appareil d'accès au terrain ou de l'appareil passerelle prédéfini ;
- après l'étape b), interrogation des spécifications de nouveaux appareils passerelles présents dans la nouvelle zone d'adresses ;
- après l'étape b), interrogation des spécifications de nouveaux appareils de terrain présents dans la nouvelle zone d'adresses.

5. Procédé selon la revendication 1 ou la revendication 4, **caractérisé en ce que** les spécifications interrogées des appareils passerelles et des appareils de terrain comprennent l'un ou plusieurs des éléments suivants : ID fabricant, ID appareil, version de protocole ou Command Revision, version d'appareil ou Device Revision, version de software ou Software Revision, profil d'appareil ou Profile Revision.

6. Procédé selon la revendication 1, **caractérisé en ce que**, pour le cas où l'au moins un pilote d'appareil disponible ne coïncide pas suffisamment avec les spécifications d'appareil interrogées, un pilote d'appareil approprié est sélectionné manuellement par l'utilisateur.

7. Procédé selon l'une des revendications 1 à 6, **caractérisé en ce que**, du côté du logiciel d'accès aux appareils, une ou plusieurs des étapes suivantes est exécutée :
- Génération d'une commande de balayage pour la zone d'adresses de l'appareil d'accès au terrain ou de l'appareil passerelle prédéfini et transmission de la commande de balayage à l'appareil d'accès au terrain ou à l'appareil passerelle prédéfini ;
- Génération d'une commande de balayage pour la nouvelle zone d'adresses mise à disposition par un appareil passerelle trouvé et transmission de la commande de balayage à l'appareil passerelle trouvé ;
- Évaluation d'un résultat de balayage obtenu par l'appareil d'accès au terrain ou par l'appareil passerelle prédéfini ;
- Évaluation des résultats de balayage, qui sont obtenus par les appareils passerelles trouvés.

8. Procédé selon l'une des revendications 1 à 7, **caractérisé en ce que** le logiciel d'accès aux appareils comprend un module logiciel de commande, et/ou **en ce que** les appareils passerelles du réseau de bus de terrain comprennent au moins l'un des composants suivants :
- une ou plusieurs E/S distante ;
- une ou plusieurs passerelles ;
- une ou plusieurs liaisons ;
- un ou plusieurs coupleurs ;
- un ou plusieurs convertisseurs de protocole ;
- un ou plusieurs multiplexeurs, et/ou
**en ce qu'**au moins l'un des appareils passerelles comporte deux ou plusieurs canaux, une sous-zone d'adresses étant adressable par l'intermédiaire de chacun des canaux, et le balayage de la zone d'adresses de l'au moins un appareil passerelle comprenant le balayage des sous-zones d'adresse.

9. Procédé selon la revendication 8, **caractérisé par** au moins l'un des points suivants :
- le balayage de la zone d'adresses de l'appareil d'accès au terrain ou de l'appareil passerelle prédéfini est démarré automatiquement par le module logiciel de commande ;
- une commande de balayage est générée par le module logiciel de commande pour la zone d'adresses de l'appareil d'accès au terrain ou de l'appareil passerelle prédéfini, et transmise à l'appareil d'accès au terrain ou à l'appareil passerelle prédéfini ;
- le balayage de la nouvelle zone d'adresses mise à disposition par un appareil passerelle trouvé est démarré automatiquement par le module logiciel de commande ;
- une commande de balayage est générée par le module logiciel de commande pour la nouvelle zone d'adresses mise à disposition par un appareil passerelle trouvé, et transmise au nouvel appareil passerelle trouvé ;
- un résultat de balayage obtenu par l'appareil d'accès au terrain ou par l'appareil passerelle prédéfini est évalué par le module logiciel de commande ;
- les résultats de balayage obtenus par les appareils passerelles trouvés sont évalués par le module logiciel de commande ;
- après l'étape a), les spécifications des appareils passerelles présents dans la zone d'adresses de l'appareil d'accès au terrain ou de l'appareil passerelle prédéfini sont interrogées automatiquement par le module logiciel de commande ;
- après l'étape b), les spécifications des nouveaux appareils passerelles présents dans la nouvelle zone d'adresses sont interrogées automatiquement par le module logiciel de commande.

10. Procédé selon l'une des revendications 1 à 9, **caractérisé par** au moins l'un des points suivants :
- une analyse du réseau de bus de terrain n'est effectuée que jusqu'à une profondeur prédéfinissable sous l'appareil d'accès au terrain ou de l'appareil passerelle prédéfini ;
- une analyse du réseau de bus de terrain est commencée sur l'appareil d'accès au réseau ou sur l'appareil passerelle prédéfini du réseau de bus de terrain ;
- une analyse du réseau de bus de terrain est uniquement effectuée pour les appareils de terrain ou les appareils passerelles d'un fabricant déterminé ;
- un résultat de l'acquisition de la topologie du réseau de bus de terrain est comparé avec une version antérieure mémorisée de la topologie du réseau de bus de terrain et les éventuelles modifications par rapport à la version antérieure sont mises en évidence.

11. Procédé selon l'une des revendications 1 à 10, **caractérisé par** au moins l'un des points suivants :
- concernant le logiciel d'accès aux appareils, il s'agit d'une application cadre selon la norme FDT ;
- concernant le logiciel d'accès aux appareils, il s'agit d'une application cadre selon la norme FDT, des pilotes conformes à la norme DTM étant intégrables dans l'application cadre ;
- concernant le logiciel d'accès aux appareils, il s'agit d'une application cadre selon la norme FDT, des DTM communication, DTM passerelle et DTM appareil étant intégrables dans l'application cadre ;
- le logiciel d'accès aux appareils est conçu pour les fichiers de description d'appareil ou les pilotes selon au moins l'une des normes suivantes : DTM, DD, EDD, EDL, FDI ;
- au sein du réseau de bus de terrain, un ou plusieurs protocoles de terrain parmi les protocoles suivants sont utilisés : Fieldbus Foundation, HART, Profibus, Modbus, CANopen, IO-Link, EtherCAT, Interbus, Profinet, Profinet IO, DeviceNet, CompoNet, d'autres protocoles Industrial Ethernet et d'autres protocoles de bus de terrain.

12. Module logiciel de commande (107, 504) destiné à l'acquisition automatisée d'une topologie d'un réseau de bus de terrain (100, 500) à partir d'un logiciel d'accès aux appareils (105, 501), le logiciel d'accès aux appareils (105, 501) étant installé sur un hôte (104, 502), lequel hôte est en liaison de données avec le réseau de bus de terrain (100, 500), le module logiciel de commande (107, 504) pouvant être intégré dans le logiciel d'accès aux appareils (105, 501), le réseau de bus de terrain (100, 500) comprenant une pluralité d'appareils de terrain et d'appareils passerelles, et le module logiciel de commande (107, 504) étant conçu pour
- exécuter un processus de balayage (600) destiné à balayer une zone d'adresses d'un appareil d'accès au terrain ou d'un appareil passerelle prédéfini du réseau de bus de terrain (100, 500) et à déterminer, dans cette zone d'adresses, la présence d'appareils passerelles et d'appareils de terrain, puis à interroger les appareils passerelles présents dans la zone d'adresses de l'appareil d'accès au terrain ou de l'appareil passerelle prédéfini et à instancier dans le logiciel d'accès aux appareils des pilotes appropriés pour les appareils passerelles et appareils de terrain présents dans cette zone d'adresses,
- démarrer un nouveau processus de balayage (601, 603) pour chaque appareil passerelle trouvé, lequel processus est destiné au balayage d'une nouvelle zone d'adresses mise à disposition par l'appareil passerelle trouvé et à déterminer de nouveaux appareils passerelles et appareils de terrain présents dans la nouvelle zone d'adresses, puis à interroger les nouveaux appareils passerelles présents dans la nouvelle zone d'adresses et à instancier, dans le logiciel d'accès aux appareils, des pilotes appropriés pour les nouveaux appareils passerelles et appareils de terrain présents dans la nouvelle zone d'adresses,
et
- répéter le dernier processus pour chaque nouvel appareil passerelle trouvé, jusqu'à ce que tous les appareils passerelles présents dans la zone sous l'appareil d'accès au terrain (100, 500) ou l'appareil passerelle prédéfini aient été trouvés ou jusqu'à ce qu'une condition d'interruption soit remplie,
une instanciation de pilotes appropriés comprenant :
- la comparaison d'au moins un pilote d'appareil disponible avec les spécifications d'appareil interrogées et détermination d'une valeur de qualité du pilote d'appareil sur la base des écarts des pilotes, relatifs à l'appareil passerelle ou à l'appareil de terrain trouvé, en ce qui concerne la version de hardware, de software ou de protocole,
- dans le cas où la valeur de qualité du pilote d'appareil se situe au-dessus d'un seuil prédéfini, instanciation automatique du pilote d'appareil et intégration du pilote d'appareil dans l'application cadre.

13. Logiciel d'accès aux appareils (105, 501), lequel est conçu pour accéder aux appareils d'un réseau de bus de terrain (100, 500),
le logiciel d'accès aux appareils (105, 501) comprenant un module logiciel de commande (107, 504) selon la revendication 12.
